Europäisches Patentamt

European Patent Office

Office européen des brevets

(19)

(11) **EP 0 603 038 B1**

(12) **FASCICULE DE BREVET EUROPEEN**

(45) Date de publication et mention
de la délivrance du brevet:
**18.09.1996 Bulletin 1996/38**

(51) Int. Cl.⁶: **B60L 7/28**

(21) Numéro de dépôt: **93402987.7**

(22) Date de dépôt: **10.12.1993**

(54) **Equipement de ralentissement à courants de Foucault**

Wirbelstrom-Verzögerungsausrüstung

Eddy current slow-down assembly

(84) Etats contractants désignés:
**AT BE CH DE ES GB IT LI NL PT SE**

(30) Priorité: **15.12.1992 FR 9215101**

(43) Date de publication de la demande:
**22.06.1994 Bulletin 1994/25**

(73) Titulaire: **LABAVIA-S.G.E.**
**F-78180 Montigny-le-Bretonneux (FR)**

(72) Inventeurs:
• **Estaque, Michel**
**F-95150 Taverny (FR)**
• **Gernot, Philippe**
**F-92150 Suresnes (FR)**

(74) Mandataire: **Loisel, Bertrand et al**
**Cabinet Plasseraud,**
**84, rue d'Amsterdam**
**75440 Paris Cédex 09 (FR)**

(56) Documents cités:
**EP-A- 0 466 941**      **FR-A- 2 505 577**

• **PATENT ABSTRACTS OF JAPAN vol. 14, no. 099
(E-893)22 Février 1990 & JP-A-13 003 100
(TOSHIBA CORP.) 6 Décembre 1989**

## Description

La présente invention concerne un équipement de ralentissement à courants de Foucault pour véhicule.

Les équipements de ce type comprennent habituellement une partie fixée au châssis du véhicule (stator) comportant des enroulements inducteurs, et une partie mobile (rotor) comportant un induit, liée à un élément rotatif du véhicule, généralement à son arbre de transmission.

Par "enroulement inducteur", ou simplement "enroulement", on entend ici aussi bien un enroulement inducteur proprement dit qu'un groupe de tels enroulements connectés entre eux une fois pour toutes en série et/ou en parallèle. Chaque enroulement ainsi défini produit un champ magnétique lorsqu'il est alimenté depuis la batterie du véhicule.

L'induit est un corps en matériau ferromagnétique qui, lorsqu'il défile devant les enroulements excités, est le siège de courants tourbillonnaires induits, dits courants de Foucault. Du fait de la résistivité de l'induit, ces courants de Foucault provoquent une dissipation d'énergie d'où résulte le ralentissement du rotor et du véhicule. L'énergie est dissipée sous forme de chaleur, et on donne habituellement au rotor une configuration à ailettes propre à évacuer cette chaleur.

Le conducteur du véhicule peut actionner une manette de commande à plusieurs positions pour obtenir un ralentissement du véhicule avec un couple variable selon la position sélectionnée. Cette variabilité est obtenue par un ensemble de relais qui commandent chacun l'excitation d'un enroulement, le nombre de relais fermés dépendant de la position de la manette. Dans une réalisation typique, il y a quatre enroulements inducteurs et cinq positions de manette correspondant respectivement à la fermeture de 0, 1, 2, 3 et 4 relais, et à des couples de ralentissement proportionnels.

Pour une position donnée, on sait que le couple de ralentissement tend à diminuer lorsque la température de l'induit augmente, à cause des variations de la résistivité et de la perméabilité magnétique de l'induit. Au-delà d'un certain seuil de température, il est judicieux de limiter l'excitation des enroulements pour éviter la perte de couple disponible qui résulterait d'un échauffement excessif. Cette limitation permet en outre une meilleure gestion des ressources en énergie électrique du véhicule.

Dans sa précédente demande FR-A-2505577, la demanderesse a décrit une façon d'assurer une telle limitation d'excitation. Le franchissement du seuil de température est détecté au moyen d'un contact thermosensible logé dans un épanouissement polaire d'une face du stator adjacente au rotor. Ce contact est sensible au rayonnement calorifique dégagé par l'induit, et est ainsi apte à fournir l'indication de température désirée.

Ce type de capteur de température est également prévu par certains constructeurs qui fabriquent des rotors avec des parties qui ne résistent pas aux fortes augmentations de température. C'est le cas par exemple des rotors à induit en acier et support en aluminium, l'aluminium ne résistant pas aux températures supérieures à 300°C.

Le rotor étant mobile, le capteur ne peut pas être en contact thermique direct avec l'induit, sauf à utiliser un montage excessivement compliqué. Le capteur doit donc être monté sur le stator pour recevoir le rayonnement dégagé par l'induit, ce qui pose trois problèmes principaux non résolus jusqu'à présent :

- l'encrassement aléatoire du capteur perturbe la mesure en gênant la réception du rayonnement ;
- il est difficile de rendre le capteur peu dépendant de la température du stator sur lequel il est monté ; et
- il est difficile de réaliser un capteur peu sensible à la chaleur transmise du rotor par circulation de l'air ; or cette circulation n'est pas totalement maîtrisée, notamment à cause des courants d'airs provoqués par les ailettes rotoriques.

En outre, le montage du capteur peut être délicat pour certains modèles de ralentisseur.

Le but de la présente invention est d'apporter une solution simple et économique aux problèmes ci-dessus.

L'invention propose ainsi un équipement de ralentissement à courants de Foucault pour véhicule, comprenant un stator comportant des enroulements inducteurs, un rotor adapté au montage sur un arbre de transmission du véhicule et comportant un induit en regard du stator, un organe de commande manuelle à plusieurs positions, des moyens de commande pour établir une consigne d'alimentation en fonction notamment de la position de l'organe de commande manuelle, et des moyens d'excitation pour exciter sélectivement les enroulements inducteurs depuis une source électrique du véhicule en réponse à la consigne d'alimentation, des moyens de contrôle de température étant prévus pour fournir une indication relative à la température de l'induit, cette indication étant prise en compte par les moyens de commande pour l'établissement de la consigne d'alimentation, caractérisé en ce que les moyens de commande comprennent, au titre des moyens de contrôle de température, un processeur adapté pour évaluer en temps réel la température de l'induit à des instants successifs, la température de l'induit à chaque instant de la succession étant évaluée par le processeur en fonction de plusieurs variables de calcul comprenant la température de l'induit évaluée à l'instant précédent de la succession, la vitesse de rotation du rotor et la consigne d'alimentation.

La demanderesse a constaté que, de façon surprenante, un nombre limité de variables de calcul permettait de rendre compte de la température de l'induit de façon suffisamment précise dans le cadre de l'utilisation envisagée de cette indication de température. Entre deux instants d'évaluation successifs, la variation de température de l'induit dépend principalement (a) de la consigne d'alimentation, qui gouverne le champ magnétique généré par le stator, (b) de la

2

vitesse de rotation du rotor, qui influence l'intensité des courants induits et la ventilation produite par le mouvement du rotor, et (c) du niveau de température de l'induit dont dépendent sa résistivité et sa perméabilité magnétique.

Dans une version préférée de l'invention, les paramètres de calcul comprennent en outre la température du stator. Cette variable influence également la température de l'induit par l'effet des transferts de chaleur, et surtout par son effet sur la résistivité du fil des enroulements dont dépendent le courant dans chaque enroulement excité et le champ magnétique généré. Sa prise en considération par le processeur permet donc une évaluation plus précise de la température de l'induit.

On peut déterminer la dépendance entre la variation de la température de l'induit sur un intervalle de temps prédéterminé et les variables de calcul retenues en effectuant des essais sur un exemplaire du modèle de ralentisseur considéré. Lors de ces essais, on enregistre les variations de température observées pour différentes valeurs des variables de calcul. Les données enregistrées peuvent alors être traitées numériquement pour déterminer une fonction qui reproduise de façon approchée la dépendance entre la température de l'induit et les variables de calcul. Les processeurs inclus dans les ralentisseurs du modèle considéré sont ensuite programmés avec cette fonction pour évaluer la température de l'induit en une succession d'instants séparés par l'intervalle de temps prédéterminé.

Dans un mode de réalisation particulier de l'invention, les moyens de commande sont agencés pour modifier la consigne d'alimentation lorsque la température évaluée par le processeur dépasse un seuil prédéterminé, de façon que les moyens d'excitation relient alors à la source électrique un nombre d'enroulements inducteurs inférieur au nombre correspondant à la position de l'organe de commande manuelle. Le seuil peut être sélectionné lors de la programmation du processeur en fonction de la configuration particulière du ralentisseur.

On observera toutefois que l'information fournie par le processeur représente une valeur de température, et non seulement le franchissement d'un seuil prédéterminé. Cette information est donc de nature plus riche que celle fournie par les capteurs équipant les ralentisseurs connus, et on peut ainsi envisager de réaliser un asservissement optimisé de la consigne d'alimentation en fonction de la température de l'induit.

D'autres particularités et avantages de la présente invention apparaîtront dans la description ci-après d'un exemple de réalisation préféré et non limitatif, lue conjointement aux dessins annexés, dans lesquels :

- la figure 1 est un schéma d'un équipement de ralentissement selon l'invention ; et
- la figure 2 est un graphique illustrant un exemple d'évolution de la température de l'induit en fonction du temps pour un équipement tel que celui de la figure 1.

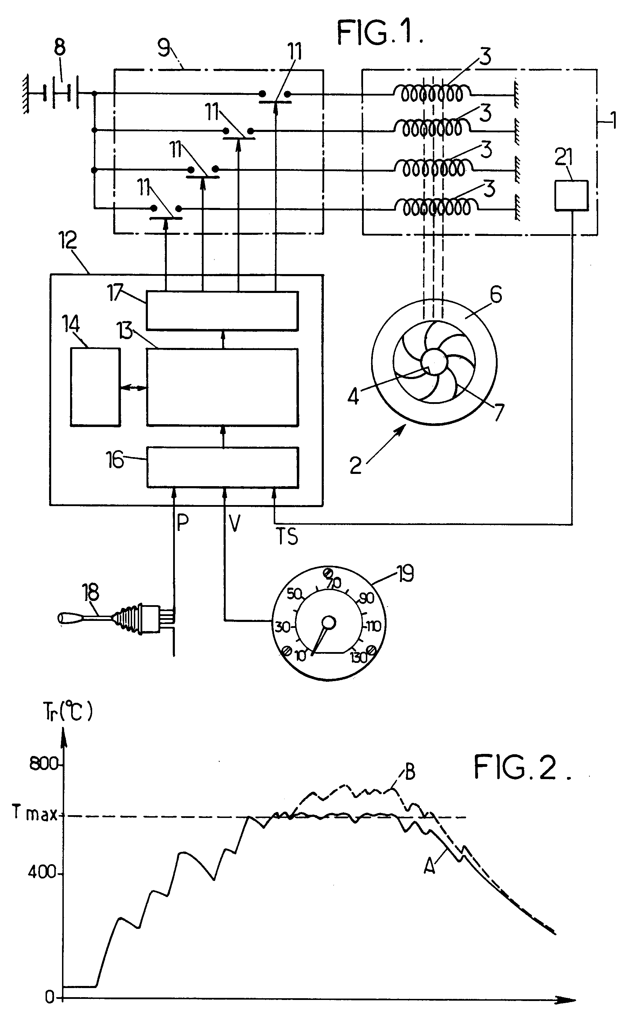

En référence à la figure 1, un équipement de ralentissement à courants de Foucault comprend de façon classique un stator 1 et un rotor 2. Le stator 1 est fixé au châssis du véhicule et comporte des enroulements inducteurs 3, qui sont au nombre de quatre dans l'exemple représenté. Les enroulements 3 sont par exemple constitués chacun par une paire de bobines, les huit bobines étant disposées autour de l'arbre de transmission (non représenté) sortant de la boîte de vitesses du véhicule, et avec leurs axes parallèles à cet arbre. Le rotor 2 est une pièce en acier moulé comportant un alésage central 4 destiné au montage solidaire sur l'arbre de transmission. Le rotor 2 comporte un ou plusieurs disques perpendiculaires à l'arbre de transmission qui constituent l'induit 6 du rotor. Entre l'induit 6 et l'alésage 4, chaque disque a classiquement une structure à ailettes 7 fournissant une ventilation lorsque l'arbre de transmission tourne. Lorsque l'équipement est assemblé sur le véhicule, l'induit 6 est situé en regard des enroulements 3 du stator 1. Dans une réalisation typique, le rotor 2 comporte un disque de chaque côté du stator, de façon que chaque disque-induit 6 défile devant une couronne de pôles magnétiques de polarités alternées de proche en proche, créée par les enroulements 3. La rotation de l'arbre de transmission génère des courants de Foucault dans l'induit 6 quand l'un au moins des enroulements est alimenté électriquement depuis la batterie 8 du véhicule. Il en résulte un couple de ralentissement croissant avec le nombre d'enroulements excités, et un échauffement de l'induit que compense en partie la ventilation par les ailettes 7.

L'équipement comprend des moyens d'excitation 9 pour alimenter sélectivement les enroulements 3 depuis la batterie 8, laquelle a typiquement une tension nominale de 24 Volts. Ces moyens d'excitation 9 sont constitués par quatre relais 11 montés chacun entre la borne positive de la batterie et une extrémité d'un enroulement respectif 3, l'autre extrémité dudit enroulement étant reliée à la borne négative de la batterie 8. Les quatre relais 11 sont commandés indépendamment par quatre signaux issus des moyens de commande 12.

Les moyens de commande 12 peuvent être constitués par une unité électronique du type microcontrôleur comportant un processeur 13 associé à une mémoire 14 et à des circuits d'interface 16, 17. L'interface d'entrée 16 reçoit un certain nombre de signaux électriques parmi lesquels :

- un signal issu d'un organe de commande manuelle à cinq positions 18, tel qu'une manette accessible au conducteur du véhicule, et représentant la position P de cet organe ;
- un signal issu du tachymètre 19 (représenté symboliquement par un cadran à la figure 1) associé à l'arbre de transmission pour en mesurer la vitesse de rotation V ; et

- un signal issu d'un capteur de température 21 monté sur le stator 1 et sensible à la température Ts du stator au voisinage du rotor 2.

Les moyens de commande 12 peuvent encore recevoir d'autres signaux et accomplir d'autres fonctions non explicitées ici car non concernées directement par l'invention.

L'interface d'entrée 16 met en forme les signaux précités et transmet les valeurs correspondantes au processeur 13. Celui-ci est programmé pour établir une consigne d'alimentation C sur la base des valeurs P, V, Ts reçues de l'interface 16. En fonction de la consigne C, le processeur 13 délivre, via l'interface de sortie 17, les quatre signaux qui commandent l'ouverture ou la fermeture de chacun des relais 11. La consigne C prend l'une des cinq valeurs : 0, 1, 2, 3 ou 4, et donne lieu à la fermeture d'un nombre correspondant de relais 11, c'est-à-dire à l'excitation d'un nombre correspondant d'enroulements inducteurs 3.

Pour établir la consigne d'alimentation C, il est tenu compte d'une indication relative à la température Tr de l'induit 6 qui, conformément à l'invention, est une évaluation de cette température Tr obtenue en temps réel par le processeur 13.

L'évaluation est effectuée à des instants successifs séparés par un intervalle de temps prédéterminé $\Delta t$ suffisamment petit vis-à-vis des échelles de temps significatives des variations de température de l'induit (par exemple $\Delta_t = 1s$). A chaque instant $t_n$ de la succession, la température $Tr_n$ de l'induit 6 est évaluée en fonction des variables de calcul suivantes :

- température $Tr_{n-1}$ de l'induit évaluée à l'instant précédent $t_{n-1} = t_n - \Delta t$ de la succession ;
- vitesse de rotation V du rotor 2 fournie par le tachymètre 19 ;
- consigne d'alimentation C, dont la valeur peut être prise soit à l'instant $t_n$ de l'évaluation soit à l'instant précédent $t_{n-1}$ ; et
- température Ts du stator 1 fournie par le capteur 21.

La demanderesse a déterminé que, pour la plupart des modèles de ralentisseur, la température de l'induit pouvait être évaluée avec une précision satisfaisante par une fonction polynômiale des variables $Tr_{n-1}$, V, C, Ts telle que:

$$Tr_n = Tr_{n-1}+a.\Delta t.kp.(b.V+c.Tr_{n-1}+d.V.Tr_{n-1}+e.Tr^2_{n-1}+f.V.Ts) \qquad (1)$$

dans laquelle :

$$b = + (b1 + b2.C),$$

$$c = - (c1 + c2.C),$$

$$d = - (d1 + d2.C),$$

$$e = + (e1 + e2.C),$$

$$f = - f2.C,$$

$$kp = 1 + (kp0 - 1) . V/3000, et$$

a, b1, b2, c1, c2, d1, d2, e1, e2, f2 et kp0 sont des coefficients constants à déterminer pour chaque modèle, la vitesse V étant exprimée en tours par minute, l'intervalle de temps $\Delta t$ en secondes et les températures $Tr_n$, $Tr_{n-1}$ et Ts en degrés Celsius.

Pour déterminer les coefficients a, b1, b2, c1, c2, d1, d2, e1, e2, f2 et kp0, on peut procéder à des essais sur un prototype du ralentisseur. On reproduit sur le banc d'essai un nombre important de situations caractérisées par les valeurs des variables d'essai considérées, et on mesure les variations de température de l'induit pendant l'intervalle de temps $\Delta t$. Chaque mesure fournit une valeur de la fonction liant $Tr_n$ aux variables $Tr_{n-1}$, V, C et Ts. On peut ensuite calculer le jeu de coefficients qui fournit la meilleure approximation des résultats de mesure par la formule (1), par exemple au moyen d'une méthode classique d'ajustement par moindres carrés mise en oeuvre par ordinateur.

On peut ainsi obtenir un bon accord entre la formule (1) et le comportement thermique de l'induit. Dans certains cas, on peut obtenir un accord satisfaisant sans inclure la température du stator Ts dans les variables de calcul, c'est-à-dire en imposant f2 = 0. Ceci peut s'expliquer par le fait que les variations de température du stator résultent principalement de celles de la température de l'induit et de la consigne d'alimentation, de sorte que la variable Ts peut parfois être écartée par un choix approprié des coefficients a, b1, b2, c1, c2, d1, d2, e1, e2 et kp0.

Le jeu de coefficients et les données utiles à l'évaluation selon la formule (1) sont stockés dans la mémoire 14 des moyens de commande 12 de chacun des ralentisseurs du modèle testé. En service, la température de l'induit pourra ainsi être évaluée en temps réel par le processeur 13, sans qu'il soit indispensable d'utiliser un capteur spécial et de subir les inconvénients qui s'y rapportent.

Pour initialiser l'algorithme représenté par la formule (1) avant la mise en oeuvre de l'équipement de ralentissement, on peut par exemple donner à la température de l'induit $Tr_o$ à l'instant initial la valeur Ts de la température du stator, ou une valeur de température ambiante fournie par un thermomètre.

La température évaluée $Tr_n$ est utilisée pour établir la consigne de commande C pendant l'intervalle de temps $\Delta t$ suivant l'évaluation. Par exemple, le processeur 13 compare la température évaluée $Tr_n$ à un seuil prédéterminé Tmax dont la valeur, choisie en fonction du modèle de ralentisseur, est stockée dans la mémoire 14. Lorsque $Tr_n$ reste inférieure au seuil Tmax, la consigne C est conforme à la position P de la manette de commande 18, le conducteur du véhicule actionnant alors la manette 18 pour sélectionner directement le nombre d'enroulements excités et obtenir ainsi un couple de ralentissement proportionnel. Lorsque $Tr_n$ dépasse le seuil Tmax, le processeur 13 impose une consigne d'alimentation C inférieure au nombre correspondant à la position de la manette 18. Ceci limite l'échauffement de l'induit 6 ainsi que du stator 1, et permet, comme expliqué en introduction, une meilleure gestion des ressources électriques du véhicule sans affecter trop sensiblement la valeur du couple de ralentissement car celle-ci tend à décroître lorsque la température de l'induit augmente pour une excitation donnée.

Ce comportement est illustré par le graphique de la figure 2 où le temps, en abscisse, représente un intervalle de simulation d'environ 15 minutes. La courbe A indique l'évolution de la température de l'induit Tr dans le cas où le véhicule est en descente et où le conducteur utilise différentes positions de la manette 18. La température Tr ne dépasse pratiquement pas le seuil Tmax (environ 630°C dans l'exemple représenté) car dès que cela se produit, la consigne d'alimentation est diminuée. La courbe en tirets B indique ce que serait l'évolution de Tr dans les mêmes conditions si l'indication de température n'était pas prise en compte : le seuil Tmax serait largement dépassé et on obtiendrait certes du couple supplémentaire, mais au prix d'une consommation en électricité bien supérieure. La décroissance finale des courbes A et B correspond à la désactivation du ralentisseur, c'est-à-dire à la remise de la manette 18 en position P = O . Dans cette phase, l'invention permet de conserver une température plus faible (courbe A au-dessous de la courbe B) de sorte que si on rencontre un nouveau besoin de ralentissement avant que l'induit se soit refroidi jusqu'à la température ambiante, le couple immédiatement disponible est supérieur à ce qu'il serait sans prise en compte de la température.

Dans une variante de l'invention, on n'utilise pas de capteur 21 pour mesurer la température du stator Ts. Si cette température Ts doit néanmoins faire partie des variables de calcul pour l'évaluation de Tr, on peut programmer le processeur 13 pour qu'il l'évalue également par un algorithme du même type que celui décrit plus haut. A cette fin, on peut utiliser simplement une formule du type:

$$Ts_n = Ts_{n-1} + (g2.Tr_{n-1} - g1). \Delta t$$

où $Ts_n$ et $Ts_{n-1}$ représentent les températures du stator évaluées respectivement aux instants $t_n$ et $t_{n-1}$, et où g1 et g2 désignent deux coefficients constants à déterminer expérimentalement comme exposé pour les autres coefficients.

Une autre variante consiste à déterminer la température du stator Ts en mesurant la tension U et l'intensité I dans un enroulement 3 et en calculant la résistance R = U/I . Dans le cas typique d'enroulements en fil de cuivre, la résistance varie sensiblement en fonction de la température et peut être utilisée pour la mesurer.

Bien qu'on ait décrit l'invention en référence à des exemples préférés, on comprendra que ces exemples ne sont pas limitatifs et que diverses modifications peuvent leur être apportées sans sortir du cadre de l'invention tel que défini par les revendications.

## Revendications

1. Equipement de ralentissement à courants de Foucault pour véhicule, comprenant un stator (1) comportant des enroulements inducteurs (3), un rotor (2) adapté au montage sur un arbre de transmission du véhicule et comportant un induit (6) en regard du stator (1), un organe de commande manuelle à plusieurs positions (18), des moyens de commande (12) pour établir une consigne d'alimentation (C) en fonction notamment de la position (P) de l'organe de commande manuelle (18), et des moyens d'excitation (9) pour exciter sélectivement les enroulements inducteurs (3) depuis une source électrique (8) du véhicule en réponse à la consigne d'alimentation (C), des moyens de contrôle de température étant prévus pour fournir une indication relative à la température (Tr) de l'induit, cette indication étant prise en compte par les moyens de commande (12) pour l'établissement de la consigne d'alimentation (C), caractérisé en ce que les moyens de commande (12) comprennent, au titre des moyens de contrôle de température, un processeur (13) adapté pour évaluer en temps réel la température de l'induit (6) à des instants successifs, la température de l'induit ($Tr_n$) à chaque instant ($t_n$) de la succession étant évaluée par le processeur (13) en fonction de plusieurs variables de calcul comprenant la température de l'induit ($Tr_{n-1}$) évaluée à l'instant précédent ($t_{n-1}$) de la succession, la vitesse de rotation (V) du rotor et la consigne d'alimentation (C).

2. Equipement selon la revendication 1, caractérisé en ce que les variables de calcul comprennent en outre la température du stator (Ts).

3. Equipement selon la revendication 2, caractérisé en ce qu'il comprend en outre des moyens (21) sensibles à la température (Ts) du stator (1) et adressant aux moyens de commande (12) un signal représentant la température du stator comprise dans les variables de calcul.

4. Equipement selon la revendication 2, caractérisé en ce que la température du stator ($Ts_n$) comprise dans les variables de calcul est évaluée par le processeur (13) à chaque instant ($t_n$) de la succession en fonction de la température de l'induit ($Tr_{n-1}$) et de la température du stator ($Ts_{n-1}$) évaluées à l'instant précédent ($t_{n-1}$) de la succession.

5. Equipement selon la revendication 4, caractérisé en ce que le processeur (13) est agencé pour évaluer la température du stator ($Ts_n$) à chaque instant ($t_n$) de la succession par une formule du type :

$$Ts_n = Ts_{n-1} + (g2.Tr_{n-1} - g1) . \Delta t$$

dans laquelle :
g1 et g2 sont des coefficients constants,
$\Delta t$ désigne l'intervalle de temps séparant ledit instant ($t_n$) de l'instant précédent ($t_{n-1}$) de la succession,
$Tr_{n-1}$ désigne la température de l'induit évaluée à l'instant précédent ($t_{n-1}$) de la succession, et
$Ts_n$ et $Ts_{n-1}$ désignent la température du stator respectivement audit instant ($t_n$) et à l'instant précédent ($t_{n-1}$) de la succession.

6. Equipement selon l'une quelconque des revendications 2 à 5, caractérisé en ce que le processeur (13) est agencé pour évaluer la température de l'induit ($Tr_n$) à chaque instant ($t_n$) de la succession par une formule du type :

$$Tr_n = Tr_{n-1} + a.\Delta t.kp.(b.V + c.Tr_{n-1} + d.V.Tr_{n-1} + e.Tr^2_{n-1}.f.V.Ts)$$

dans laquelle :

$$b = + (b1 + b2.C),$$

$$c = - (c1 + c2.C),$$

$$d = - (d1 + d2.C),$$

$$e = + (e1 + e2.C),$$

$$f = - f2.C,$$

$$kp = 1 + (kp0 - 1) . V/3000,$$

a, b1, b2, c1, c2, d1, d2, e1, e2, f2 et kp0 sont des coefficients constants,
$\Delta t$ désigne l'intervalle de temps séparant ledit instant ($t_n$) de l'instant précédent ($t_{n-1}$) de la succession,
V désigne la vitesse de rotation du rotor,
C désigne la consigne d'alimentation égale au nombre d'enroulements (3) alimentés,
Ts désigne la température du stator, et
$Tr_n$ et $Tr_{n-1}$ désignent la température de l'induit respectivement audit instant ($t_n$) et à l'instant précédent ($t_{n-1}$) de la succession.

7. Equipement selon l'une quelconque des revendications 1 à 6, caractérisé en ce que les moyens de commande (12) sont agencés pour modifier automatiquement la consigne d'alimentation (C) lorsque la température ($Tr_n$) évaluée par le processeur (13) dépasse un seuil prédéterminé (Tmax), de façon que les moyens d'excitation (9) relient alors à la source électrique (8) un nombre d'enroulements inducteurs (3) inférieur au nombre correspondant à la position (P) de l'organe de commande manuelle (18).

**Claims**

1. Eddy current brake equipment for a vehicle, comprising a stator (1) including inductor windings (3), a rotor (2) adapted for mounting on a transmission shaft of the vehicle and including an armature (6) facing the stator (1), a manual control member (18) having a plurality of positions, control means (12) for establishing a power feed setting (C) as a function of, in particular, the position (P) of the manual control member (18), and excitation means (9) for selectively exciting the inductor windings (3) from an electricity source (8) of the vehicle in response to the power feed setting (C), temperature monitoring means being provided for delivering an indication relating to the temperature (Tr) of the armature, said indication being taken into account by the control means (12) for establishing the power feed setting, characterized in that the control means (12) comprise, as said temperature monitoring means, a processor (13) adapted to evaluate in real time the temperature of the armature (6) at successive instants, the armature temperature ($Tr_n$) at each instant ($t_n$) in the succession being evaluated by the processor (13) as a function of a plurality of computation variables comprising the armature temperature ($Tr_{n-1}$) evaluated at the preceding instant ($t_{n-1}$) of the succession, the speed of rotation (V) of the rotor, and the power feed setting (C).

2. Equipment according to claim 1, characterized in that the computation variables further comprise the temperature of the stator (Ts).

3. Equipment according to claim 2, characterized in that it further comprises means (21) responsive to the temperature (Ts) of the stator (1) and delivering a signal to the control means (12) representative of the stator temperature included in the computation variables.

4. Equipment according to claim 2, characterized in that the stator temperature ($Ts_n$) included in the computation variables is evaluated by the processor (13) at each instant ($t_n$) of the succession as a function of the armature temperature ($Tr_{n-1}$) and of the stator temperature ($Ts_{n-1}$) as evaluated at the preceding instant ($t_{n-1}$) of the succession.

5. Equipment according to claim 4, characterized in that the processor (13) is arranged to evaluate the stator temperature ($Ts_n$) at each instant ($t_n$) of the succession by means of an equation of the type:

$$Ts_n = Ts_{n-1} + (g2.Tr_{n-1} - g1).\Delta t$$

in which:
   g1 and g2 are constant coefficients;
   $\Delta t$ designates the time interval between said instant ($t_n$) and the preceding instant ($t_{n-1}$) of the succession;
   $Tr_{n-1}$ designates the temperature of the armature as evaluated at the preceding instant ($t_{n-1}$) of the succession; and
   $Ts_n$ and $Ts_{n-1}$ designate the temperature of the stator respectively at said instant ($t_n$) and at the preceding instant ($t_{n-1}$) of the succession.

6. Equipment according to any one of claims 2 to 5, characterized in that the processor (13) is arranged to evaluate the armature temperature ($Tr_n$) at each instant ($t_n$) of the succession by means of an equation of the type:

$$Tr_n = Tr_{n-1} + a.\Delta t.kp.(b.V + c.Tr_{n-1} + d.V.Tr_{n-1} + e.Tr^2_{n-1} + f.V.Ts)$$

in which:

$$b = +(b1 + b2.C)$$

$$c = -(c1 + c2.C)$$

$$d = -(d1 + d2.C)$$

$$e = +(e1 + e2.C)$$

$$f = -f2.C$$

$$kp = 1 + (kp0 - 1).V/3000, \text{ and}$$

a, b1, b2, c1, c2, d1, d2, e1, e2, f2, and kp0 are constant coefficients;

$\Delta t$ designates the time interval separating said instant ($t_n$) from the preceding instant ($t_{n-1}$) of the succession;

V designates the speed of rotation of the rotor, in rpm;

C designates the power feed setting and is equal to the number of powered windings (3);

Ts designates the stator temperature; and

$Tr_n$ and $Tr_{n-1}$ designate the armature temperature respectively at said instant ($t_n$) and at the preceding instant ($t_{n-1}$) of the succession.

7. Equipment according to any one of claims 1 to 6, characterized in that the control means (12) are arranged to change the power feed setting (C) automatically whenever the armature temperature ($Tr_n$) evaluated by the processor (13) exceeds a predetermined threshold (Tmax), such that the excitation means (9) then connect the electricity source (8) to a number of inductor windings (3) that is less than the number which corresponds to the position (P) of the manual control member (18).

**Patentansprüche**

1. Ausrüstung zur Wirbelstromverzögerung bei einem Fahrzeug, welche einen Stator (1) mit Induktionswicklungen (3), einen zur Anbringung auf einer Antriebswelle des Fahrzeugs geeigneten Rotor (2), welcher einen Anker (6) gegenüber dem Stator (1) umfaßt, ein Element zur manuellen Betätigung mit mehreren Stellungen (18), Steuermittel (12) zur Bildung eines Speiseeinstellwerts (C) insbesondere in Abhängigkeit von der Stellung (P) des Elements zur manuellen Betätigung (18) und Einrichtungen (9) zur selektiven Erregung der Induktionswicklungen (3) von einer Stromquelle (8) des Fahrzeugs aus im Ansprechen auf den Speiseeinstellwert (C) aufweist, wobei zur Lieferung einer Angabe über die Temperatur (Tr) des Ankers Temperatursteuermittel vorgesehen sind und diese Angabe von den Steuermitteln (12) bei der Bildung des Speiseeinstellwerts (C) berücksichtigt wird, **dadurch gekennzeichnet**, daß die Steuermittel (12) als Temperatursteuermittel einen Prozessor (13) aufweist, der zur Berechnung der Temperatur des Ankers (6) in Echtzeit zu aufeinanderfolgenden Zeitpunkten ausgelegt ist, wobei der Wert der Ankertemperatur ($Tr_n$) zu jedem Zeitpunkt ($t_n$) der Folge vom Prozessor (13) in Abhängigkeit von mehreren Berechnungsvariablen bestimmt wird, zu welchen die Werte der zum vorhergehenden Zeitpunkt ($t_{n-1}$) in der Folge bestimmten Ankertemperatur ($Tr_{n-1}$), der Drehzahl (V) des Rotors und des Speiseeinstellwerts (C) gehören.

2. Ausrüstung nach Anspruch 1, **dadurch gekennzeichnet**, daß die Berechnungsvariablen darüberhinaus die Temperatur des Stators (Ts) umfassen.

3. Ausrüstung nach Anspruch 2, **dadurch gekennzeichnet**, daß sie außerdem gegenüber der Temperatur (Ts) des Stators (1) empfindliche Mittel (21) aufweist, welche den Steuermitteln (12) ein Signal zuleiten, das zu den Berechnungsvariablen gehörende Temperatur des Stators repräsentiert.

4. Ausrüstung nach Anspruch 2, **dadurch gekennzeichnet**, daß der Wert der zu den Berechnungsvariablen gehörenden Temperatur des Stators ($Ts_n$) zu jedem Zeitpunkt ($t_n$) der Folge vom Prozessor (13) in Abhängigkeit von dem zum vorhergehenden Zeitpunkt ($t_{n-1}$) in der Folge bestimmten Wert der Ankertemperatur ($Tr_{n-1}$) und der Statortemperatur ($Ts_{n-1}$) bestimmt wird.

5. Ausrüstung nach Anspruch 4, **dadurch gekennzeichnet**, daß der Prozessor (13) in der Weise arbeitet, daß der Wert der Statortemperatur ($Ts_n$) zu jedem Zeitpunkt ($t_n$) der Folge mit Hilfe einer Formel vom Typ:

$$Ts_n = Ts_{n-1} + (g2 \cdot Tr_{n-1} - g1) \cdot \Delta t$$

bestimmt wird, in welcher:

g1 und g2 konstante Koeffizienten sind,

$\Delta t$ die Zeitspanne angibt, die zwischen dem Zeitpunkt ($t_n$) und dem vorhergehenden Zeitpunkt ($t_{n-1}$) in der Folge liegt,

$Tr_{n-1}$ den Wert der zum vorhergehenden Zeitpunkt ($t_{n-1}$) in der Folge bestimmten Temperatur des Ankers angibt, und

$Ts_n$ und $Ts_{n-1}$ die jeweilige Temperatur des Stators zu dem Zeitpunkt ($t_n$) und dem vorhergehenden Zeitpunkt ($t_{n-1}$) in der Folge darstellen.

6. Ausrüstung nach einem der Ansprüche 2 bis 5, **dadurch gekennzeichnet**, daß der Prozessor (13) so arbeitet, daß die Ankertemperatur ($Tr_n$) zu jedem Zeitpunkt ($t_n$) der Folge mit Hilfe einer Formel vom Typ:

$$Tr_n = Tr_{n-1} + a \cdot \Delta t \cdot kp \cdot (b \cdot V + c \cdot Tr_{n-1} + d \cdot V \cdot Tr_{n-1} + e \cdot Tr^2_{n-1} + f \cdot V \cdot Ts)$$

bestimmt wird, in welcher:

$$b = + (b1 + b2 \cdot C),$$

$$c = - (c1 + c2 \cdot C),$$

$$d = - (d1 + d2 \cdot C),$$

$$e = + (e1 + e2 \cdot C),$$

$$f = - f2 \cdot C,$$

$$kp = 1 + (kp0 - 1) \cdot V/3000,$$

a, b1, b2, c1, c2, d1, d2, e1, e2, f2 und kp0 konstante Koeffizienten sind,
$\Delta t$ die Zeitspanne angibt, die zwischen dem Zeitpunkt ($t_n$) und dem vorhergehenden Zeitpunkt ($t_{n-1}$) in der Folge liegt,
V die Drehzahl des Rotors angibt,
C den Speiseeinstellwert bezeichnet, der gleich der Anzahl der gespeisten Wicklungen (3) ist,
Ts die Statortemperatur bezeichnet, und
$Tr_n$ und $Tr_{n-1}$ die jeweilige Temperatur des Ankers zu dem Zeitpunkt ($t_n$) und dem vorhergehenden Zeitpunkt ($t_{n-1}$) in der Folge darstellen.

7.  Ausrüstung nach einem der Ansprüche 1 bis 6, **dadurch gekennzeichnet**, daß die Steuermittel (12) in der Weise arbeiten, daß der Speiseeinstellwert (C) automatisch verändert wird, wenn die Temperatur ($Tr_n$), deren Wert vom Prozessor (13) bestimmt wird, einen vorgegebenen Schwellwert (Tmax) überschreitet, so daß die Erregungseinrichtungen (9) nun eine Anzahl von Induktionswicklungen (3) mit der Stromquelle (8) verbinden, welche kleiner ist als die der Stellung (P) des Elements zur manuellen Betätigung (18) entsprechende Zahl.

# FIG.1.

# FIG.2.